# EUROPEAN PATENT SPECIFICATION

(11) **EP 0 467 534 B1**
(45) Date of publication and mention of the grant of the patent: **07.02.1996**
(21) Application number: 91305561.2
(22) Date of filing: 19.06.1991
(51) Int. Cl.: H04Q 7/38

(54) **Telecommunication network**
Telekommunikationsnetzwerk
Réseau de télécommunications

(30) Priority: 20.07.1990 GB 9015938
(43) Date of publication of application: 22.01.1992
(73) Proprietor: VODAFONE LIMITED, Newbury, Berkshire RG13 1JL (GB)
(72) Inventor: McCombe, Michael J., Newbury, Berkshire, RG13 3DS (GB)
(74) Representative: Foster, David Martyn

(56) References cited:
- WO-A-86/04764
- NTZ NACHRICHTECHNISCHE ZEITSCHRIFT. vol. 43, no. 5, May 1990, BERLIN DE pages 380 - 385; FUHRMANN: 'Intelligente Vermittlungsfunktionen für Mobilkommunikationsnetze - Teil 2'

## Description

The invention relates to telecommunication networks by means of which a plurality of subscribers may communicate with each other. Embodiments of the invention to be described in more detail below comprise such telecommunications networks in the form of telephone networks and more especially to such networks involving mobiles (such as in a cellular network) which can communicate with each other and with fixed telephones via a public switched telephone network (PSTN). One such telephone network is the planned pan-European digital telephone network (the "GSM" network).

Such a network is shown in the article "Intelligente Vermittlungsfunktionen für Mobilkommunikationsnetze-Teil 2" by W. fuhumann in NTZ NACHRICHTENTECHNISCHE ZEITSCHRIFT, vol. 43, no. 5, May 1990, pages 380-385.

In the embodiments of the invention to be described, subscribers intending to communicate via mobiles will be issued with tokens by which they will identify themselves when making a call via the system network, such tokens being, for example, in the form of so-called "smartcards". Such smartcards carry data such as identification numbers and other information to ensure the security of the system. It is desirable that such smartcards can be issued to new subscribers, and that replacement smartcards can be issued to existing subscribers in the event of wear or loss, rapidly and simply, for example, by a retail dealer, but without compromising the securing of the issued smartcard and of the system.

According to the invention, there is provided a telecommunication network by means of which a plurality of subscribers may communicate with each other, each subscriber having a token by means of which they may respectively identify themselves to the network, each token causing a unique secure identification number to be input into the network, the network comprising main storage means having a plurality of storage locations each for storing a respective one of the secure identification numbers and a corresponding access number by which the subscriber which has the token associated with that identification number may be accessed via the network, further storage means split into parts each of which is located at a different position in the network and each for storing a respective part only of an analysis table which links each identification number with the identity of the corresponding one of the storage locations of the main storage means, accessing means responsive to each identification number input into the system for accessing the relevant part of the further storage means and extracting from the part of the analysis table stored there the identity of the corresponding one of the storage locations of the main storage means, and extracting means for extracting from that storage location the corresponding access number whereby to enable calls to and from that subscriber to be set up and permitting a random relationship between the identification numbers and the access numbers.

According to the invention, there is also provided a method of operating a cellular telephone network in which the subscribers respectively identify themselves to the network by means of smartcards which cause respective subscriber identification numbers to be input into the network via the relevant cells thereof, the identification numbers being secure and having a random relationship with the subscribers' telephone numbers, the method comprising the steps of setting up, in a home location register, storage locations for each telephone number each of which also stores the corresponding subscriber identification number and other subscriber data, setting up an analysis table correlating each identification number with the corresponding storage location in the home location register, storing respective parts of this analysis table at different locations in the network, responding to an identification number input at a particular cell by deriving an address from the identification number and using this address to locate the relevant part of the analysis table within the network, obtaining therefrom the storage location of the home location register corresponding to the identification number, extracting the corresponding subscriber's telephone number from that storage location, and storing that telephone number in a visitor location register associated with the originating cell.

Part of a cellular telephone network, such as the proposed GSM system, embodying the invention will now be described, by way of example only, with reference to the accompanying diagrammatic drawing which is a block diagram of the network.

The network being described is cellular in operation. Communication to and from mobiles in the network is by radio link between them and respective base stations, each base station defining a cell of the network. When a mobile is activated, this is signalled to the base station of the cell in which the mobile is currently located and the network identifies the mobile and records its current location area (a location area comprises a group of cells), updating this information as the mobile moves from one location area to another. A mobile can initiate a call via its base station and the network to another mobile or, via the PSTN (to which the network is connected), to a fixed subscriber to the PSTN.

Similarly, calls can be made to the mobile via the network from other mobiles or from fixed subscribers to the PSTN. In order to enable such calls to be made and received, and for call charges to be successfully billed to mobile subscribers, it is clearly vital that a proper arrangement be incorporated for identifying subscribers and ensuring so far as possible that only properly authorised subscribers can initiate calls from particular mobiles. As a means of achieving these aims, the system provides each subscriber with a smartcard. The smartcard is pre-programmed with a unique identification number, the "International Mobile Subscriber Identity" (IMSI) which is kept secure, that is, it is not visible on the card and is not known to the subscriber. In addition, each subscriber will be issued with a publicly known number, the MSISDN ("Mobile Station International ISDN Number"). This is the subscriber's telephone number by means of which calls to that subscriber are initiated by other subscribers to the system and to the PSTN.

In order to activate a mobile in the network (so that it may make or receive calls), the subscriber has to place his smartcard in a card reader at the mobile telephone and to enter an identification number (PIN). Provided that the entered PIN is found to be correct for that particular smartcard, the mobile transmits the IMSI (read from the card) to the appropriate base station so as to enable the system to record the location of the particular mobile. However, it is also necessary, of course, for the system to be aware of the MSISDN associated with that IMSI, so that, for example, an incoming call for that particular mobile (which the caller will initiate using the called subscriber's MSISDN) can be correctly routed.

Subscribers to the system will normally subscribe via a dealer who will be the intermediary between the subscriber and the network operator. In practice, there will be a relatively large number of such dealers. Each dealer will be issued by the network operator with a batch of smartcards, each bearing a pre-programmed IMSI (and other information such as the PIN and security data), none of which is externally visible. In addition, the card will have an identifying serial number embossed on it and thus readily visible. The dealer will issue a new subscriber with one of these smartcards, selected at random, and will issue the subscriber with an MSISDN provided by the network operator. The dealer will inform the network operator of the embossed (visible) serial number of the smartcard issued. The network operator will thus be able to correlate the IMSI of the issued smartcard with the corresponding MSISDN - but this information will be unknown to anyone else.

In practice, smartcards are likely to need replacement, because of wear, after, say, two years. In addition, some of them are likely to be lost or damaged and will have to be replaced. When a subscriber wishes to have his smartcard replaced, he will return to the dealer who will select a fresh smartcard from his batch of unissued ones, again at random. This time, though, a new MSISDN will not be issued; the subscriber will retain the same MSISDN always, and the dealer therefore has to inform the network operator of the embossed (visible) serial number of the newly issued smart card, together with the (unchanged) MSISDN. The network operator again therefore knows the IMSI associated with that MSISDN but, as before, no one else does.

In this way, only the minimum information is known to the dealer (and subscriber) and security is maximised. However, the effect of this is that the relationship between each IMSI and the corresponding MSISDN is substantially random. The system therefore has to store, in a "home location register" (HLR), information for correlating each IMSI with the correct MSISDN and other subscriber data. Therefore, when a mobile becomes activated within the network (in the manner described), thus transmitting its IMSI into the network, the network has to be able to record the location of that subscriber, not only identifying the subscriber by the IMSI but also by the associated MSISDN (in order, for example, to enable incoming calls to be correctly directed to that subscriber).

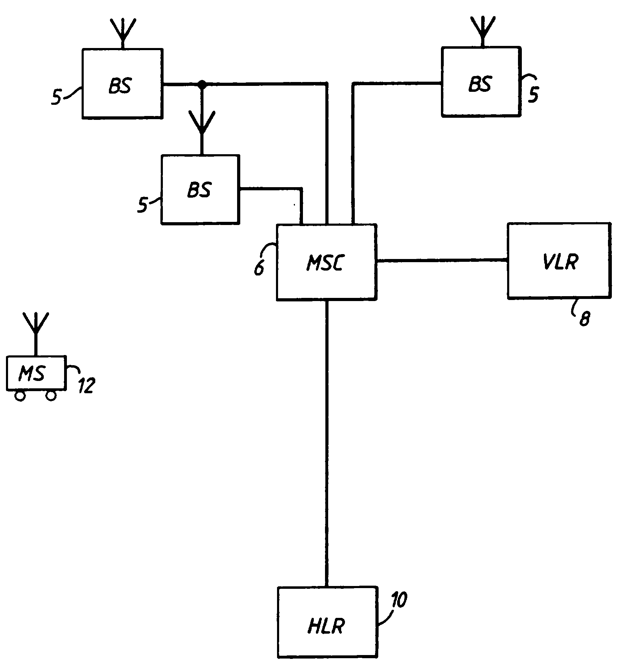

The Figure shows part of the network in simplified form. As shown, there are a plurality of base stations (BS) 5, each serving a particular geographical location or cell. A mobile service switching centre (MSC) 6 is connected to a group of the base stations 5 via wired connections, each MSC serving some, only, of the base stations within the total network. Each MSC has associated with it a visitor location register (VLR) 8 to which it is connected by a wired connection. In addition, the system contains a "home location register" (HLR) 10.

The HLR comprises fixed data storage having a separate storage location for each subscriber. Within each such location is stored the MSISDN for the subscriber and the associated IMSI, together with other subscriber data. When a mobile subscriber (MS), as indicated diagrammatically at 12, enters a cell and signals its IMSI to the corresponding base station (in the manner already explained), the MSC 6, in the manner to be explained, causes the correct location in the HLR to be examined and the correct subscriber's data, including the correct MSISDN, to be extracted and stored temporarily in a location in the VLR 8. Therefore, when a call is made by or to that particular MS, the MSC 6 has all the necessary information in the VLR 8 in order to set up the call and to issue the appropriate billing information.

Successful operation for the procedure described above requires the VLR to be able to respond to an incoming IMSI by accessing the correct location in the HLR. As explained above, the relationship between each IMSI and its MSISDN is completely random. There therefore has to be an "analysis table" in the network which associates each IMSI with the corresponding location in the HLR. One way of achieving this would be for each VLR to hold such an analysis table and to use it, in response to receipt of each IMSI, to identify the corresponding HLR location and thus to extract the correct subscriber data. However, each such analysis table would have to have an entry for every individual IMSI currently allocated in the network (that is, one for each subscriber), and this could eventually become very large and difficult to maintain.

This problem could of course be overcome if there were always a direct relationship between the IMSI and the MSISDN. Therefore, upon receipt of a particular IMSI the VLR could extract the corresponding MSISDN and use this to access the correct location in the HLR. However, such an arrangement would have the effect that each smartcard would be particular to a specific MSISDN which would complicate issuance and replacement of smartcards. In order to preserve constancy of the MSISDN, the replacement smartcard would have to be individually manufactured so as to have the correct IMSI. If this were done by the network operator, the subscriber would be faced with unacceptable delay when the need for a replacement smartcard arose. It would be unacceptable on security grounds to permit the dealer to manufacture the replacement card. Such an arrangement would also be wasteful because it would require the network operator to provide resources on the network not only for active subscriptions but also for potential subscriptions represented by the unissued smartcards.

In order to deal with this problem, therefore, the analysis table is not maintained at each of the VLR but a single analysis table is distributed throughout the network, the analysis table being divided up into parts each of which is held at a particular location or "node" within the network, such as at a particular MSC (or other signalling element). When an IMSI is received from a mobile subscriber entering the network, the IMSI is analysed to derive, directly from it, a "Global Title" which is used as a means of accessing the correct part of the analysis table. Each node stores not only part of the analysis table but also information indicating where the remaining parts of the analysis table are stored. Therefore, the first node receiving the Global Title corresponding to a particular IMSI analyses the Global Title to decide whether it corresponds to a particular IMSI for which the detailed analysis table is stored at that node. If that is found to be the case, then the HLR location is extracted and the message forwarded to that HLR. However, if the node finds that the Global Title corresponds to an IMSI which is not included in the part of the analysis table which it stores, it knows which other part of the network (that is, which other node) is storing the part of the analysis table corresponding to that IMSI and produces routing information which forwards the enquiry message to that node. The HLR location can thus be correctly located as before.

When a replacement smartcard is issued to a subscriber, the relevant part of the analysis table is found within the network and up-dated so as to direct subsequent enquiry messages to the correct location in the HLR, this up-dating being in addition to the up-dating which is carried out on that particular location in the HLR.

## Claims

1. A telecommunication network by means of which a plurality of subscribers may communicate with each other, each subscriber having a token by means of which they may respectively identify themselves to the network, each token causing a unique secure identification number to be input into the network, the network comprising main storage means (10) having a plurality of storage locations each for storing a respective one of the secure identification numbers and a corresponding access number by which the subscriber which has the token associated with that identification number may be accessed via the network, the network being characterised by further storage means split into parts each of which is located at a different position (e.g. MSC) in the network and each for storing a respective part only of an analysis table which links each identification number with the identity of the corresponding one of the storage locations of the main storage means (10), accessing means (MSC) responsive to each identification number input into the system for accessing the relevant part of the further storage means (e.g. MSC) and extracting from the part of the analysis table stored there the address of the corresponding one of the storage locations of the main storage means (10), and extracting means for extracting from that storage location the corresponding access number whereby to enable calls to and from that subscriber to be set up and permitting a random relationship between the identification numbers and the access numbers.

2. A network according to claim 1, characterised in that each token is a smartcard.

3. A network according to claim 1 or 2, characterised in that each said part of the further storage means (e.g. MSC) is also adapted to store information identifying the locations on the other parts of the further storage means and the respective identification numbers corresponding thereto.

4. A network according to any preceding claim, characterised in that it is in the form of a cellular telephone network for mobile subscribers (MS) and in which the access numbers are the subscribers' telephone numbers.

5. A network according to claims 3 and 4, characterised by a plurality of visitor location registers (8) each associated with some of the cells of the network, and in that the main storage means comprises a home location register (10) for at least part of the network, in that some at least of the said parts of the further storage means are respectively associated with different signalling nodes in the network, in that the accessing means comprises means associated with each such node for responding to a particular one of the identification numbers input into the network via one of the cells associated with a particular one of the visitor location registers (8) for determining whether the part of the analysis table relevant to that identification number is held in association with that node and, if it is not, for deriving from information stored at that node the location of the relevant part of the analysis table and obtaining therefrom the address of the corresponding storage location in the home location register (10), and in that the extracting means comprises means for accessing this storage location in the home location register (10) and transmitting information therefrom, including the subscriber's telephone number, to the visitor location register associated with the cell into which that subscriber has input the identification number.

6. A network according to claim 5, characterised in that some of the said nodes are mobile service switching centres (6) each controlling some of the cells of the network and each having at least one of the visitor location registers (8) associated with it.

7. A method of operating a cellular telephone network in which the subscribers respectively identify themselves to the network by means of smartcards which cause respective subscriber identification numbers to be input into the network via the relevant cells thereof, the method comprising the steps of setting up, in a home location register (10), storage locations for each telephone number each of which also stores the corresponding subscriber identification number and other subscriber data, and the method being characterised in that the identification numbers have a random relationship with the subscribers' telephone numbers, and by the steps of setting up an analysis table correlating each identification number with the corresponding storage location in the home location register (10), storing respective parts of this analysis table at different locations in the network, responding to an identification number input at a particular cell by deriving an address from the identification number and using this address to locate the relevant part of the analysis table within the network, obtaining therefrom the storage location of the home location register (10) corresponding to the identification number, extracting the corresponding subscriber's telephone number from that storage location, and storing that telephone number in a visitor location register (8) associated with the originating cell.

## Patentansprüche

1. Ein Telekommunikationsnetzwerk mittels dessen eine Mehrzahl von Teilnehmern miteinander kommunizieren können, wobei jeder Teilnehmer eine Berechtigungsmarke hat, mittels der sie jeweils sich selbst für das Netzwerk identifizieren können, jede Berechtigungsmarke bewirkt, daß eine einzigartige, geheime Kennummer in das Netzwerk eingegeben wird, das Netzwerk eine Hauptspeichereinrichtung (10) umfaßt, die eine Mehrzahl von Speicherstellen hat, jeweils zum Speichern einer entsprechenden der geheimen Kennummer und einer entsprechenden Zugriffsnummer, durch die auf den Teilnehmer, der die mit der Kennummer verbundene Berechtigungsmarke hat, über das Netzwerk zugegriffen werden kann, wobei das Netzwerk **gekennzeichnet ist** durch eine weitere Speichereinrichtung, die in Teile aufgeteilt ist, von denen sich jeder an einer verschiedenen Stelle (beispielsweise MSC) in dem Netzwerk befindet und jede zum Speichern nur eines jeweiligen Teils einer Analysetabelle ist, die jede Kennummer mit der Identität der entsprechenden der Speicherstellen der Hauptspeichereinrichtung (10) verbindet, eine Zugriffseinrichtung (MSC), die auf jede Kennummerneingabe in das System reagiert, um auf den relevanten Teil der weiteren Speichereinrichtung (beispielsweise MSC) zuzugreifen und von dem Teil der dort gespeicherten Analysetabelle die Adrese der entsprechenden der Speicherstellen der Hauptspeichereinrichtung (10) zu gewinnen, und eine Gewinnungseinrichtung zum Gewinnen der entsprechenden Zugriffsnummer von dieser Speicherstelle, wodurch Anrufe zu dem Teilnehmer und von ihm aufgebaut werden können und eine zufällige Beziehung zwischen den Kennnummern und den Zugriffsnummern ermöglicht wird.

2. Ein Netzwerk gemäß Anspruch 1, **dadurch gekennzeichnet**, daß jede Berechtigungsmarke eine Smartcard ist.

3. Ein Netzwerk gemäß Anspruch 1 oder 2, **dadurch gekennzeichnet**, daß jeder genannte Teil der weiteren Speichereinrichtung (beispielsweise MSC) auch Informationen speichern kann, die die Speicherstellen bei den anderen Teilen der weiteren Speichereinrichtung und die Jeweiligen Kennummern, die ihnen entsprechen, identifizieren.

4. Ein Netzwerk gemäß irgendeinem vorhergehenden Anspruch, **dadurch gekennzeichnet**, daß es in der Form eines Zellen-Telefonnetzwerks für Mobiltelefonteilnehmer (MS) ist und bei dem die Zugriffsnummern die Telefonnummern der Teilnehmer sind.

5. Ein Netzwerk gemäß Anspruch 3 und 4, **gekennzeichnet durch** eine Mehrzahl von Bezucherdateien (8), von denen jede mit einigen der Zellen des Netzwerks verbunden ist, und daß die Hauptspeichereinrichtung eine Heimatdatei (10) für mindestens einen Teil des Netzwerks umfaßt, daß mindestens einige der genannten Teile. der weiteren Speichereinrichtung jeweils mit unterschiedlichen signalknoten in dem Netzwerk verbunden sind, daß die Zugriffseinrichtung eine Einrichtung umfaßt, die mit jedem solchen Knoten zum Reagieren auf eine bestimmte der Kennummerneingabe verbunden ist, die in das Netzwerk über eine der Zellen eingegeben worden ist, die mit einer bestimmten der Besucherdateien (8) verbunden ist, um zu bestimmen, ob der Teil der Analysetabelle, der für die Kennummer relevant ist, in Verbindung mit diesem Knoten gehalten ist, und, wenn es nicht ist, aus Informationen, die bei diesem Knoten gespeichert sind, den Ort des relevanten Teils der Analysetabelle abzuleiten und davon die Adresse der entsprechenden Speicherstelle in der Heimatdatei (10) zu erhalten, und daß die Gewinnungseinrichtung eine Einrichtung umfaßt, um auf diese Speicherstelle in der Heimatdatei (10) zuzugreifen und Informationen von dort, einschließlich der Telefonnummer des Teilnehmers, an die Besucherdatei zu übertragen, die mit der Zelle verbunden ist, in die der Teilnehmer seine Kennummer eingegeben hat.

6. Ein Netzwerk gemäß Anspruch 5, **dadurch gekennzeichnet**, daß einige der genannten Knoten Mobiltelefon-Dienstwählzentren (6) sind, von denen jedes einige der Zellen des Netzwerks steuert und jedes mit mindestens einer der Besucherdateien (8) verbunden hat.

7. Ein Verfahren zum Betreiben eines Zellen-Telefonnetzwerks, indem die Teilnehmer jeweils sich selbst dem Netzwerk mittels Smartcarten identifizieren, die bewirken, daß die jeweiligen Teilnehmerkennummern in das Netzwerk über relevante Zellen von ihr eingegeben werden, wobei das Verfahren die Schritte umfaßt, in einer Heimatdatei (10) Speicherstellen für jede Telefonnummer einzurichten, von denen jede auch die entsprechende Kennummer des Teilnehmers und andere Teilnehmerdaten speichert, und wobei das Verfahren **dadurch gekennzeichnet ist**, daß die Kennummern eine zufällige Beziehung zu den Telefonnummern der Teilnehmer haben, und durch die Schritte, eine Analysetabelle aufzustellen, die jede Kennummer mit der entsprechenden Speicherstelle in der Heimatdatei (10) korreliert, entsprechende Teile dieser Analysetabelle an unterschiedlichen Stellen in dem Netzwerk zu speichern, auf eine Kennummerneingabe in einer bestimmten Zelle zu reagieren, indem eine Adresse von der Kennummer abgeleitet und diese Adresse verwendet wird, den relevanten Teil der Analystabelle innerhalb des Netzwerks zu lokalisieren, um davon die Speicherstelle der Heimatdatei (10) zu erhalten, die der Kennummer entspricht, die entsprechende Telefonnummer des Teilnehmers von dieser Speicherstelle zugewinnen, und diese Telefonnummer in einer Besucherdatei (8) zu speichern, die mit der erzeugenden Zelle verbunden ist.

## Revendications

1. Réseau de télécommunication au moyen duquel plusieurs abonnés peuvent communiquer l'un avec l'autre, chaque abonné ayant un jeton avec lequel ils peuvent s'identifier respectivement au réseau, chaque jeton occasionnant un numéro d'identification protégé et unique à introduire dans le réseau, le réseau comprenant des moyens principaux de mémoire (10) comprenant plusieurs emplacements de mémoire pour emmagasiner chacun un numéro particulier parmi des numéros d'identification protégés et un numéro d'accès correspondant au moyen duquel l'abonné, qui possède le jeton associé avec ce numéro d'identification, peut être joint par le réseau, le réseau étant caractérisé par des autres moyens de mémoire divisés en parties dont chacune est située a une position différente (par exemple un centre de communication à branchement mobile (MSC)) dans le réseau et pour emmagasiner chacun une partie respective seulement d'une table d'analyse qui relie chaque numéro d'identification avec l'identité du numéro correspondant des emplacements de mémoire des moyens principaux de mémoire (10), des moyens d'accès (MSC) en réponse à chaque entrée de numéro d'identification dans le système pour accéder à la partie pertinente des autres moyens de mémoire (par exemple MSC) et extraire, de la partie de la table d'analyse emmagasinée en cela, l'adresse du numéro correspondant des emplacements de mémoire des moyens principaux de mémoire (10), et des moyens d'extraction pour extraire de cet emplacement de mémoire le numéro d'accès correspondant permettant en cela d'établir des appels vers et de cet abonné et permettant une relation aléatoire entre les numéros d'identification et les numéros d'accès.

2. Réseau selon la revendication 1, caractérisé en ce que chaque jeton est une carte à puce.

3. Réseau selon la revendication 1 ou 2, caractérisé en ce que chacune desdites parties des autres moyens de mémoire (par exemple MSC) est également agencée pour emmagasiner des informations qui identifient les emplacements sur les autres parties des autres moyens de mémoire et les numéros d'identification respectifs qui correspondent avec ceux-ci.

4. Réseau selon l'une quelconque des revendications précédentes, caractérisé en ce que qu'il est sous forme d'un réseau téléphonique cellulaire pour des abonnés mobiles (AM) et dans lequel les numéros d'accès sont les numéros de téléphone des abonnés.

5. Réseau selon la revendication 3 et 4, caractérisé par plusieurs registres (8) d'emplacement de visiteur, associés chacun avec certaines des cellules du réseau, et en ce que le moyen principaux de mémoire comprend un registre (10) d'emplacement de domicile pour au moins une partie du réseau, en ce que certains d'au moins lesdites parties des autres moyens sont respectivement associés avec différents noeuds de signalisation dans le réseau, en ce que les moyens d'accès comprennent des moyens associés avec chacun d'un tel noeud pour répondre à un des numéros d'identification particulier introduit dans le réseau par une des cellules associées avec un des registres (8) d'emplacement de visiteur particulier pour déterminer si la partie de la table d'analyse pertinente à ce numéro d'identification est maintenue en association avec ce noeud et, si ce n'est pas le cas, pour déduire, à partir des informations emmagasinées à ce noeud, l'emplacement de la partie pertinente de la table d'analyse et obtenir de cela l'adresse de l'emplacement de mémoire correspondant dans le registre (10) d'emplacement de domicile, et en ce que le moyen d'extraction comprend des moyens pour accéder à cet emplacement de mémoire dans le registre (10) d'emplacement de domicile et transmettre des informations à partir de ceux-là, comprenant le numéro de téléphone de l'abonné, vers le registre d'emplacement de visiteur associé avec la cellule dans laquelle cet abonné a introduit le numéro d'identification.

6. Réseau selon la revendication 5, caractérisé en ce que certains desdits noeuds sont des centres (6) de communication à branchement mobile qui contrôlent chacun certaines des cellules du réseau et qui comprennent chacun au moins un des registres (8) d'emplacement de visiteur associés avec ceux-ci.

7. Procédé d'utilisation d'un réseau à téléphone cellulaire dans lequel les abonnés s'identifient respectivement au réseau à l'aide de cartes à puce qui occasionne l'introduction de numéros d'identification d'abonné respectifs dans le réseau par les cellules pertinentes de celui-ci, le procédé comprenant les étapes d'établissement, dans un registre (10) d'emplacement de domicile, des emplacements de mémoire pour chaque numéro de téléphone, qui chacun emmagasine également le numéro d'identification d'abonné correspondant et d' autres données d'abonnés, et le procédé étant caractérisé en ce que les numéros d'identification ont une relation aléatoire avec les numéros de téléphone des abonnés, et par les étapes d'établissement d'une table d'analyse mettant en corrélation chaque numéro d'identification avec l'emplacement de mémoire correspondant dans le registre (10) d'emplacement de domicile, d'emmagasinage des parties respectives de cette table d'analyse à des emplacements différents dans le réseau, de réponse à une entrée de numéro d'identification à une cellule particulière en déduisant une adresse à partir du numéro d'identification et en utilisant cette adresse pour localiser la partie pertinente de la table d'analyse à l'intérieur du réseau, en obtenant de cela l'emplacement de mémoire du registre (10) d'emplacement de domicile correspondant au numéro d'identification, d'extraction du numéro de téléphone de l'abonné correspondant à partir de cet emplacement de mémoire, et d'emmagasinage de ce numéro de téléphone dans un registre (8) d'emplacement de visiteur associé avec la cellule qu'il a produit à l'origine.
